# EUROPEAN PATENT SPECIFICATION

(11) **EP 1 714 071 B1**
(45) Date of publication and mention of the grant of the patent: **02.07.2008**
(21) Application number: 05704755.7
(22) Date of filing: 25.01.2005
(51) Int. Cl.: F16M 9/00

(54) **SUPPORT FOR A MACHINE OR APPARATUS HAVING AN ACCESS OPENING AT A SIDE SURFACE THEREOF**
STÜTZE FÜR EINE MASCHINE ODER VORRICHTUNG MIT EINER ZUGANGSÖFFNUNG AN EINER SEITENFLÄCHE DAVON
SUPPORT DESTINE A UNE MACHINE OU A UN APPAREIL POSSEDANT UNE OUVERTURE D'ACCES AU NIVEAU D'UNE SURFACE LATERALE DE CELUI-CI

(30) Priority: 29.01.2004 SE 0400182
(43) Date of publication of application: 25.10.2006
(73) Proprietor: AB ELECTROLUX, S-105 45 Stockholm (SE)
(72) Inventor: MARTINSSON, Jörgen, S-341 36 Ljungby (SE); NILSSON, Jan, C., S-311 92 Falkenberg (SE)
(74) Representative: Svahn, Göran
(86) International application number: PCT/SE2005/000084
(87) International publication number: WO 2005/073614

(56) References cited:
- DE-C2- 19 925 340

## Description

The invention relates to a support for a machine or apparatus having an access opening on a side surface thereof, such as a front-load laundry washing and/or drying machine of the kind having a loading opening at a front wall thereof.

Normally, a front-load washing machine for domestic use is placed on a floor which means that the front access opening will be situated so that a user has to bend his back in order to load or unload the machine. In case of a washing machine for professional use there are two different types in use, namely one type which is bolted to a rigid support of concrete or the like and another type which is placed on the floor. For a machine placed on a support the access opening will be positioned at a convenient height whereas the machine placed on the floor will involve the same disadvantage as the machine for domestic use referred to.

The patent publication DE 197 16 825 A1 discloses a mobile support for a washing machine comprising a supporting plate and legs which can be placed on the floor to support a washing machine so that the access opening of the machine is disposed at a convenient height for loading and unloading the machine. An advantage with this kind of support is that no rigid base of concrete or the like has to be set up so that the machine can be placed on any supporting floor in a building, not only at the basement level.

The patent publication EP0781517 A1 discloses a similar support to the one described in this specification.

An object of the invention is to provide a different solution, according to which a machine or apparatus having an access opening at a side surface thereof is normally disposed at a level similar to that of a machine placed on a floor. However, for loading and unloading purposes the machine can be raised to a level which may be convenient for a user.

The object is achieved in a machine which has obtained the characterizing features indicated in claim 1. Preferred embodiments are included in associated sub-claims.

Other objects and advantages will appear from the following detailed description of a few embodiments of the invention with reference to the enclosed drawings. The embodiments relate to washing machines of the front-load type having an access opening disposed at a front surface thereof. However, the invention is equally applicable to any machine or apparatus having an access opening provided on a side surface thereof.
Fig. 1a shows a first embodiment in which a laundry washing machine is placed on a support in a lower-most position;
Fig. 1b shows the machine of Fig. 1a in a higher-most position, and
Fig. 1c shows the machine in a tilted-back position;
Fig. 2a is a side view of the support in the position shown in Fig. 1a;
Fig. 2b is a side view of the support in the position shown in Fig. 1b;
Fig. 2c is a side view of the support in the position shown in Fig. 1c;
Fig. 3a is a side view of a different support in the position shown in Fig. 1a;
Fig. 3b is a side view of the support of Fig. 3a in the position shown in Fig. 1b;
Fig. 3c is a side view of the support of Fig. 3a in the position shown in Fig. 1c, and
Fig. 4 is a schematic side view of a support including a jack type lifting device.
Fig. 5a shows a second embodiment in which the washing machine of Fig. 1a is mounted in a box-like covering and shown in a lower-most position;
Fig. 5b shows the washing machine of Fig. 5a in a higher-most position, and
Fig. 5c shows the washing machine of Fig. 5b in a tilted position.

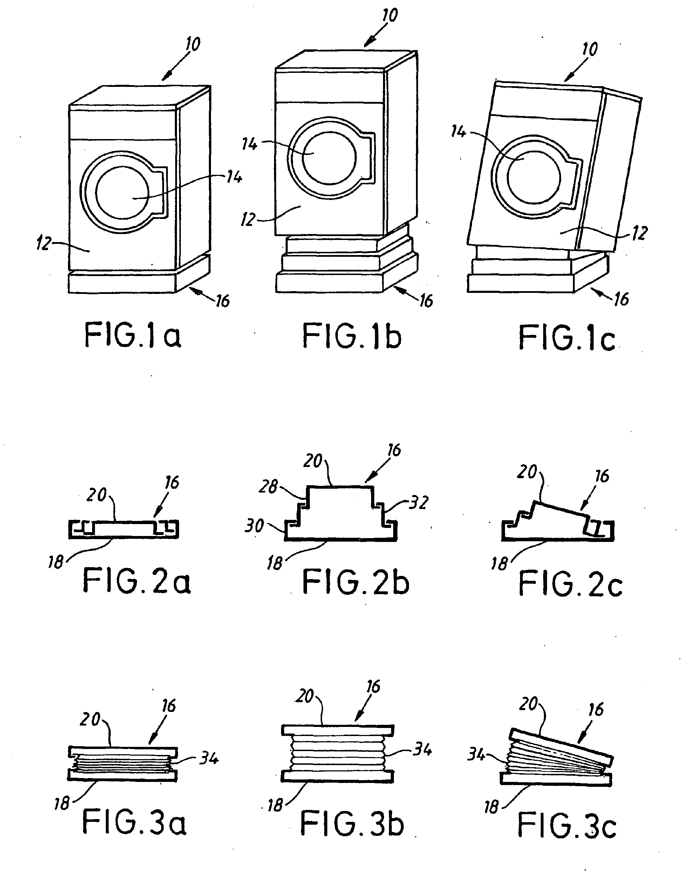

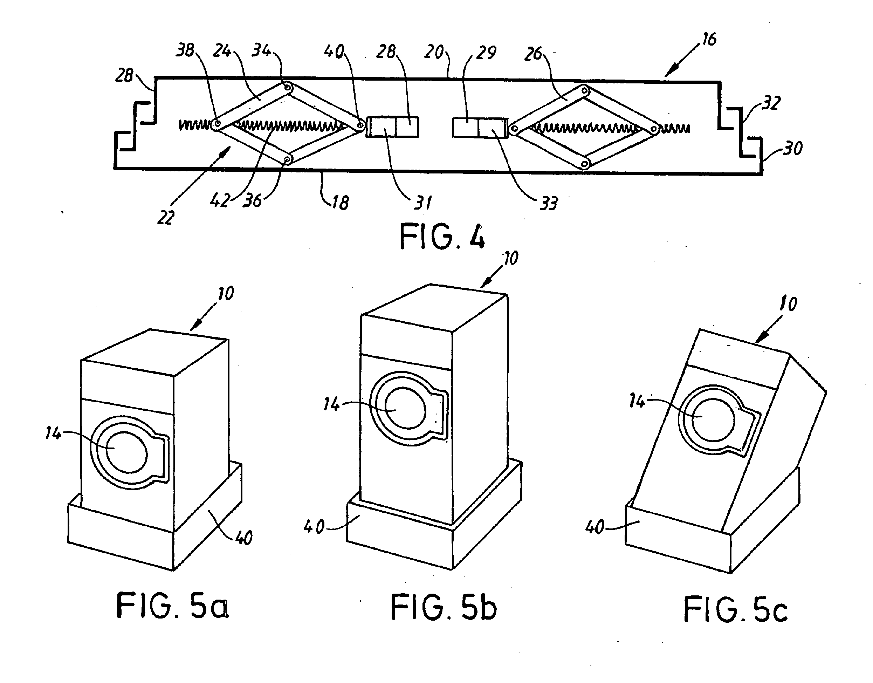

In the drawings there is shown a laundry washing machine 10 having a front wall 12 in which an access opening is formed closed by a door 14. The machine is mounted on a support 16 comprising a bottom plate 18 intended to be resting on a floor or the like and a supporting plate 20 intended to support the machine 10. A lifting device 22 is provided for raising and lowering the supporting plate 20. Fig. 4 shows one embodiment of the lifting device which makes use of two scissor type jacks 24, 26 driven by electric motors 28, 29. The jacks 24, 26 can be operated separately to place the supporting plate 20 with the machine 10 in the positions shown in Figs. 1a - 1c. The loading and unloading procedure will be greatly facilitated in the position shown in fig. 1b and even more in the position shown in fig. 1c in which the machine 10 and the access opening is tilted backwards.

The side views of Figs. 2a-c show the support 16 in the positions shown in Figs. 1a-c. In order to cover the space between the bottom plate 18 and the supporting plate 20 in the various positions taken by the supporting plate 20 a number of telescopic socket plates can be provided. In one embodiment shown in Figs. 1a-c and 2a-c an upper socket plate 28 is formed integral with the supporting plate 20 and a lower socket plate 30 is likewise formed integral with the bottom plate 18. An intermediate socket plate 32 is formed so as to interact with the upper and lower socket plates 28, 30, respectively, to form a complete cover enclosing the space between the supporting plate 20 and the bottom plate 18. If required several socket plates 32 can be provided.

Figs 3a-c show a housing enclosing the space between the supporting plate 20 and the bottom plate 18. In this embodiment a bellows cover 34 is used which is made of rubber or reinforced rubber. A suitable plastics material would also be possible.

As already indicated above, the lifting device 16, shown in fig. 4, comprises two scissor type jacks 24, 26. Each jack comprises a first joint 34 fixed to the supporting plate 20 and a second joint 36 secured to the bottom plate 18. The scissor type jack also comprises a third and a fourth joint, 38, 40, respectively, and to joint 38 is fixed a nut, not shown, cooperating with a screw 42 rotated by an electric motor 28, 29. When the screw 42 rotates the supporting plate 20 is raised or lowered depending on the direction of rotation of the screw. In order to adapt the motor 28, 29 to the associated screw 42 a suitable transmission 31, 33 is disposed between the motor and the screw. As a result a motor with reduced power and size can be chosen.

With reference to Fig. 1a-c both jacks 24, 26 are operated in order for the machine 10 to take the position shown in Fig. 1b. If jack 24 is operated while jack 26 remains at rest the machine 10 will take the position shown in Fig. 1c. Other desired positions may be taken by the machine 10 by operation of the jacks 24, 26 differently.

Alternatively, the supporting plate 20 may be a scissor lifting table operated in a similar way as the jacks 24, 26 by an electric motor. The scissor lifting table is preferably adapted to be tiltable in a forward or backward direction, for example for the machine to take the position shown in Fig. 2 c. It is also possible to replace a single scissor lifting table by two smaller ones which support the washing machine in a similar way as the jacks 24, 26, i.e. a forward table supports the front part of the machine and a rear table supports the rear part of the machine 10.

In a further alternative embodiment of the invention, shown in Figs. 5a-5c, the washing machine 10 is mounted in a box-like covering 40 surrounding the lower part of the machine up to a height just below the door 14. The washing machine itself is mounted on the mounting plate 20 of the support 16 as shown in Fig. 4. In fig. 5a the washing machine is shown in its lower-most position and in Fig. 5b the washing machine has been raised to its uppermost position. In Fig. 5c, finally, the washing machine has been tilted backwards in order to facilitate loading and unloading of the machine.

In all embodiments of the invention the washing machine 10 is raised to its uppermost position and eventually tilted for loading and unloading purposes. However, before a working process in the washing machine is initiated the machine is tilted back and lowered to its lowermost position wherein it is locked to remain in a stable condition during the duration of the working process. Arrangements for locking and unlocking the washing machine have not been shown in detail.

The invention is not restricted to the embodiments described herein and shown in the drawings but modifications can be made within the scope defined by the appending claims. Accordingly, even if the embodiments shown refer to laundry washing machines the invention is likewise applicable to laundry drying machines of the front-load type.

## Claims

1. Support for a laundry and/or drying machine (10) having an access opening on a side surface thereof closable by a door (14), comprising a first member (18) intended to rest on a floor, a second member (20) supporting the machine (10) and being movably supported by said first member (18), a lifting device (22) being provided for raising and lowering said second member (20), and a locking arrangement for locking and unlocking the second member (20) in its lowermost position, **characterized in that** a housing is provided to enclose the space between, the first and second members (18, 20).

2. Support according to claim 1, **characterized in that** the lifting device (22) comprises a scissor lift table.

3. Support according to claim 2, **characterized in that** the scissor lift table is tiltable to place the front of the machine (10) in a higher or lower position as compared to the back of the machine (10).

4. Support according to claim 1, **characterized in that** the lifting device (22) comprises two scissor lift tables, a forward table supporting the front part of the machine (10) and a rear table supporting the rear part of the machine (10).

5. Support according to any of claims 2-4, **characterized in that** the lifting device (22) comprises a screw and nut mechanism driven by an electric motor.

6. Support according to claim 1, **characterized in that** the second member has the shape of a supporting plate (20), the lifting device (22) comprising a front jack (24) supporting a forward part of the supporting plate (20) and a rear jack (26) supporting a rear part of said supporting plate (20).

7. Support according to claim 6, **characterized in that** each jack (24, 26) comprises a screw and nut mechanism (42) operated by an electric motor (28, 30).

8. Support according to claim 8, **characterized in that** the housing comprises a plurality of telescopic socket plates (28,30,32).

9. Support according to claim 8, **characterized in that** the housing comprises a bellows cover (34) made of rubber or reinforced rubber.

## Patentansprüche

1. Sockel für eine Wasch- und/oder Trocknermaschine (10), die an einer Seitenfläche eine Öffnung aufweist und mit einer Tür (14) verschließbar ist, wobei der Sockel ein erstes Element (18) aufweist, das auf einem Boden aufliegen soll, und ein zweites Element (20), das die Maschine (10) trägt und vom ersten Element (18) beweglich getragen wird, des weiteren eine Hubvorrichtung (22) zum Anheben und Absenken des zweiten Elements (20) sowie eine Verriegelungsanordnung zum Verriegeln und Entriegeln des zweiten Elements (20) in seiner untersten Stellung, **dadurch gekennzeichnet, dass** ein Gehäuse vorgesehen ist, um den Raum zwischen dem ersten und dem zweiten Element (18, 20) einzuschließen.

2. Sockel gemäß Anspruch 1, **dadurch gekennzeichnet, dass** die Hubvorrichtung (22) einen Scherenhebetisch umfasst.

3. Sockel gemäß Anspruch 2, **dadurch gekennzeichnet, dass** der Scherenhebetisch so neigbar ist, dass die Vorderseite der Maschine (10) in eine höhere oder tiefere Stellung im Vergleich zur Rückseite der Maschine versetzt werden kann.

4. Sockel gemäß Anspruch 1, **dadurch gekennzeichnet, dass** die Hubvorrichtung (22) zwei Scherenhebetische umfasst, und zwar einen vorderen Tisch, der den vorderen Teil der Maschine (10) trägt, und einen hinteren Tisch, der den hinteren Teil der Maschine (10) trägt.

5. Sockel gemäß einem der Ansprüche 2-4, **dadurch gekennzeichnet, dass** die Hubvorrichtung (22) einen Schrauben/Muttern-Mechanismus umfasst, der von einem Elektromotor angetrieben wird.

6. Sockel gemäß Anspruch 1, **dadurch gekennzeichnet, dass** das zweite Element die Form einer Tragplatte (20) aufweist und die Hubvorrichtung (22) einen vorderen Heber (24), der einen vorderen Teil der Tragplatte (20) trägt, und einen hinteren Heber (26), der einen hinteren Teil der Tragplatte (20) trägt, aufweist.

7. Sockel gemäß Anspruch 6, **dadurch gekennzeichnet, dass** jeder Heber (24, 26) einen von einem Elektromotor (28, 30) betriebenen Schrauben/Mutternmechanismus umfasst.

8. Sockel gemäß Anspruch 8, **dadurch gekennzeichnet, dass** das Gehäuse eine Mehrzahl von Teleskopsteckplatten (28, 30, 32) umfasst.

9. Sockel gemäß Anspruch 8, **dadurch gekennzeichnet, dass** das Gehäuse einen Balgmantel (34) aus Gummi oder verstärktem Gummi umfasst.

## Revendications

1. Support pour une machine de blanchisserie et/ou de séchage (10) comportant une ouverture d'accès sur une surface latérale de celle-ci pouvant être fermée par une porte (14), comprenant un premier élément (18) destiné à reposer sur un plancher, un deuxième élément (20) supportant la machine (10) et supporté de manière mobile par ledit premier élément (18), un dispositif d'élévation (22) prévu pour élever et abaisser ledit deuxième élément (20), et un agencement de verrouillage pour verrouiller et déverrouiller le deuxième élément (20) dans sa position la plus basse, **caractérisé en ce qu'**un logement est prévu pour enfermer l'espace entre les premier et deuxième éléments (18, 20).

2. Support selon la revendication 1, **caractérisé en ce que** le dispositif d'élévation (22) comprend une table élévatrice à ciseaux.

3. Support selon la revendication 2, **caractérisé en ce que** la table élévatrice à ciseaux peut être inclinée pour placer l'avant de la machine (10) à une position plus haute ou plus basse comparée à l'arrière de la machine (10).

4. Support selon la revendication 1, **caractérisé en ce que** le dispositif d'élévation (22) comprend deux tables élévatrices à ciseaux, une table avant supportant la partie avant de la machine (10) et une table arrière supportant la partie arrière de la machine (10).

5. Support selon l'une quelconque des revendications 2 à 4, **caractérisé en ce que** le dispositif d'élévation (22) comprend un mécanisme à vis et écrou entraîné par un moteur électrique.

6. Support selon la revendication 1, **caractérisé en ce que** le deuxième élément a la forme d'une plaque de support (20), le dispositif d'élévation (22) comprenant un vérin de levage avant (24) supportant une partie avant de la plaque de support (20) et un vérin de levage arrière (26) supportant une partie arrière de ladite plaque de support (20).

7. Support selon la revendication 6, **caractérisé en ce que** chaque vérin de levage (24, 26) comprend un mécanisme à vis et écrou (42) actionné par un moteur électrique (28, 30).

8. Support selon la revendication 8, **caractérisé en ce que** le logement comprend une pluralité de plaques de support télescopiques (28, 30, 32).

9. Support selon la revendication 8, **caractérisé en ce que** le logement comprend un couvercle à soufflet (34) constitué de caoutchouc ou de caoutchouc renforcé.
